# EUROPEAN PATENT SPECIFICATION

(11) **EP 0 772 844 B1**
(45) Date of publication and mention of the grant of the patent: **19.08.1998**
(21) Application number: 95925951.6
(22) Date of filing: 24.07.1995
(51) Int. Cl.: G06T 7/60

(54) **DRUMS FOR USE IN A REMOTELY CONTROLLED ENVIRONMENT**
TROMMELFÖRMIGER BEHÄLTER ZUR VERWENDUNG IN EINER FERNGESTEUERTEN UMGEBUNG
FUTS DESTINES A UNE UTILISATION DANS UN ENVIRONNEMENT CONTROLE A DISTANCE

(30) Priority: 29.07.1994 GB 9415300
(43) Date of publication of application: 14.05.1997
(73) Proprietor: British Nuclear Fuels PLC, Risley Warrington Cheshire, WA3 6AS (GB)
(72) Inventor: CASE, David, Robert, Cheshire WA3 6AS (GB); HOLMES, William, Ampthill Bedford MK45 2HD (GB); COOK, Ronald, Ampthill Bedford MK45 2HD (GB)
(86) International application number: GB9501739
(87) International publication number: WO9604612

(56) References cited:
- US-A- 3 736 899
- PATTERN RECOGNITION LETTERS, vol. 7, no. 5, June 1988 AMSTERDAM NL, pages 279-290, XP 000003874 E.R. DAVIES 'A hybrid sequential-parallel approach to accurate circle centre location'
- COMPUTER VISION GRAPHICS AND IMAGE PROCESSING, vol. 38, no. 3, June 1987 DULUTH (US), pages 317-326, U.M. LANDAU 'ESTIMATION OF A CIRCULAR ARC CENTER AND ITS RADIUS'

## Description

The present invention relates to drums for use in a remotely controlled environment and a method of detecting the position of such drums.

Drums are employed in a variety of applications for storing hazardous materials such as radioactive powders, eg UO₃. Desirably, such drums are handled by remotely controlled operations so that human operators do not have to be close to the hazardous material. The drums used in the prior art have not always been detectable without error by an optical detection system such as a video camera when viewed for remote handling. Serious problems could result if the handling system attempted to pick up an erroneously detected drum. The drum could for example be knocked over and the hazardous material spilled.

A method which can be used for detecting the centre of an outer surface of the top of a drum is disclosed in Computer Vision Graphics and Image Processing, vol. 38, no. 3, June 1987 Duluth (US), pages 317-326, U.M. Landau: 'Estimation of a Circular arc Center and its Radius'.

Document US-A-3,736,899 discloses a hermetrically sealable container of the type for keeping foodstuffs. The cap design of this container changes colour on the loss of vacuum for monitoring the integrity of the cap seal. In case of loss of vacuum a central coloured area of the cap becomes visible, which contrasts with the surrounding silvery or white background.

According to the present invention in a first aspect there is provided a drum for use in a remotely controlled environment, the drum having a closed top providing an outer surface adapted to be recognised by an optical detection system, as defined in claim 1.

Preferably, the drum is cylindrical and the first and second regions are concentric and their centres coincide with the axis of the drum. The drum body may have a shape which is or approximates to a right circular cylinder. A substantial part of the said outer surface may comprise a flat surface. The said top of the drum may comprise a neck portion on which is fitted a lid or closure which provides the said outer surface. The lid or closure may have a rim formation which fits on a lip on the said neck eg by crimping to form a tight seal.

The boundary between the said first and second regions desirably forms a closed figure which is or approximates to a circle having its centre substantially co-incident with the drum axis. The first region may comprise a reflecting circle at the centre of the said drum top outer surface and the second region may comprise an absorbing ring formed around the said circle. The absorbing ring may occupy substantially the remainder of the outer surface. For example, where the outer surface is of a lid sealed on the drum, the absorbing ring may occupy substantially the remainder of the outer surface of the lid.

The drum may be made of a material having a reflective surface, eg a metal such as stainless steel. The drum may have a lid made of the same material. An absorbing ring-shaped coating may be deposited on the outer surface of the lid to define the said second region, the uncoated region within the ring defining the said first region. The coating may be provided by a blackened paint or resin, eg an epoxy resin, or a region formed by anodising, or by laser etching, or as a stuck on target layer or as an insert fitted in a surface recess.

The uncoated region may contain an engraved code, eg a laser etched code, which may uniquely identify the drum being observed or the contents of the drum or other data.

Drums according to the present invention may be used to store hazardous material, eg radioactive material. The radioactive material may comprise an actinide or a compound thereof, eg an oxide of uranium such as UO₃ produced as a recycled product from reprocessing of irradiated nuclear fuel. Such drums may be stored in a building or vault in which they are to be moved and stored by remote handling operations.

According to the present invention in a second aspect there is provided a method of detecting the centre of the said outer surface of the top of the drum according to the first aspect, the method comprising detecting by a photodetector optical radiation reflected from the top of the drum, analysing an output signal provided by the photodetector to detect features in the signal corresponding to the boundary between the said first and second regions on the drum top outer surface, and calculating from the position of the said features in the analysed signal the position of the centre of the drum.

The said photodetector may comprise a video camera, eg incorporating a charge coupled device (CCD) detector. The output signal may comprise a series of pixels in a picture frame detected by the camera. The output signal may be captured and digitised by a so called frame grabber. The said image analysis and centre calculation may be carried out by a digital computer (in which the frame grabber may be incorporated) using known digital signal processing techniques. For example, the said image analysis may employ a connectivity signal processing algorithm which finds the boundary around bright pixels in the image corresponding to the first region enclosed by the second region. The digital computer may also apply permissible maximum and minimum limits to the number of pixels in the region enclosed by the detected boundary and/or calculate the shape of the region in the detected image and compare it with a perfect shape, eg a perfect circle, so that spurious images, other than the first region, which may be-present in the detected signal, may be rejected by the signal processing system.

The digital computer may for example produce a histogram profile of the number of pixels in the detected image having each of the various possible brightness or grey scale levels in a given brightness range, eg having 256 levels. It may use an algorithm which is adaptive to the histogram profile to find a transition in the profile corresponding to the brightness (reflectivity) transition between the first and second regions. The algorithm may operate by starting at the high brightness end of the histogram and then moving through the histogram in a direction of reducing pixel brightness until a threshold I is obtained. The threshold I is found when the total number of pixels of brightness equal to or greater than the value of I is equal to the minimum permissible area for the first region. The brightness, I is then used within the connectivity algorithm and a contour is produced of pixels of value I, which form a closed area.

If such an area is found, but according to predetermined criteria is too big or too small, the area may be rejected and the computer may continue to search for a suitable closed area by continuing through the histogram in a direction of reducing pixel brightness, I. Eventually, when a closed area is found in the correct dimension range, the roundness of boundary of the area may be found by the computer. The mean square error of the position of the actual boundary of the detected image of the first region may be compared with that of perfect circle. The roundness detected in this way should be better than a minimum threshold level, eg 0.1, otherwise the computer can be required to continue to search for a suitable closed area approximating to a circle. This combined histogram and connectivity signal processing allows target identification to be successful over a wide range of ambient light levels.

In another form, a system embodying the inventions can be adapted to use the histogram and connectivity software described above to search for and locate other pre-determined objects provided that they have sufficient contrast from the background environment. Other combinations of image processing are also possible, eg histogram with edge detection, or histogram with correlation or histogram with block matching. These combinations will give improved performance over edge detection, correlation and block matching respectively. The improved performance will be particularly noticeable under conditions where the ambient light level can vary extensively.

The output signal may be transmitted from the photodetector to the digital computer for processing by a communications link which allows the output signal to be processed in a location remote from the observed drum. Thus, the drum may, as noted above, be in a drum storage area and the digital computer may be located outside the drum storage area in a separate control station. Communication from the photodetector to the digital computer may be made via a radio communications link comprising a distributed antenna system using a known so-called leaky feeder. A leaky feeder is similar in principle to a conventional co-axial cable except that the metallic screen employed to guide the r.f. signal along the cable is modified to allow leakage of the signal and hence to transmit and receive signals. Such a communication system overcomes, for example the problems of signal interference from metallic drums and steel reinforcements in a reinforced concrete structure.

The drums according to the present invention may be employed in a drum handling system in a drum store. The drums may be moved by a remotely controlled vehicle which may for example have a grab and lift mechanism, eg. a known manipulator for lifting and placing the drums. The vehicle may carry infra-red and/or ultrasonic sensors to prevent collisions. The vehicle may also be self-navigated, its position being determined using a laser sensor. All of the sensors may be mounted on the vehicle and markers, eg bar code strips, may be provided on the inner walls of the store to facilitate position reading by the laser sensor. The movements of the vehicle may be under the control of a digital computer located outside the drum storage area. Communication between the vehicle and its controlling computer may be via a leaky feeder link, which may be the same as that employed for transmission of output signals from the photodetector. The photodetector may be mounted upon the remotely controlled vehicle.

In use of a drum handling system as described above, the vehicle locates itself under computer control in a position close to a drum to be picked up. The co-ordinates of the position of the vehicle are measured and an image of the drum is formed by the photodetector. A signal representative of the image is sent to an image processing digital computer outside the storage area which analyses the image and finds the centre of the top of the drum in the manner described above. The co-ordinates of the position of the centre of the drum are fed to the vehicle controlling computer which calculates and applies any necessary fine adjustment to the position of a manipulator, which may be mounted on the vehicle relative to the drum so that the manipulator may accurately pick up the drum. The drum may for example be picked up from an input conveyer and taken by the vehicle to a designated position in the store which may be marked on the floor of the store. Drums may be stacked several high in a multi-floor store to facilitate storage of a large number of drums. After storage, the drums may be located, picked up and returned to an output conveyer in a manner similar to that used for movement to their storage position.

The Applicants have found that the present invention provides a convenient and successful means for remotely locating drums accurately in a store for drums containing hazardous material, even when received image signal powers are as low as -80dBm, as illustrated further below.

Embodiments of the present invention will now be described by way of example with reference to the accompanying drawings, in which:
Figure 1 is a cross-sectional side elevation of a drum for storage of UO₃ powder;
Figure 2 is a cross-sectional side elevation of a lid for the drum shown in Figure 1;
Figure 3 is a plan view (as seen in the direction X in Figure 2) of the lid shown in Figure 2;
Figure 4 is a schematic block circuit design of apparatus for detecting the centre of the top surface of the drum lid shown in Figures 2 and 3;
Figure 5 and 6 are graphs respectively of processing time T and seconds and detected target roundness R (a ratio as defined below) versus signal to noise ratio S (dBm) illustrating performance of the apparatus shown in Figure 3.

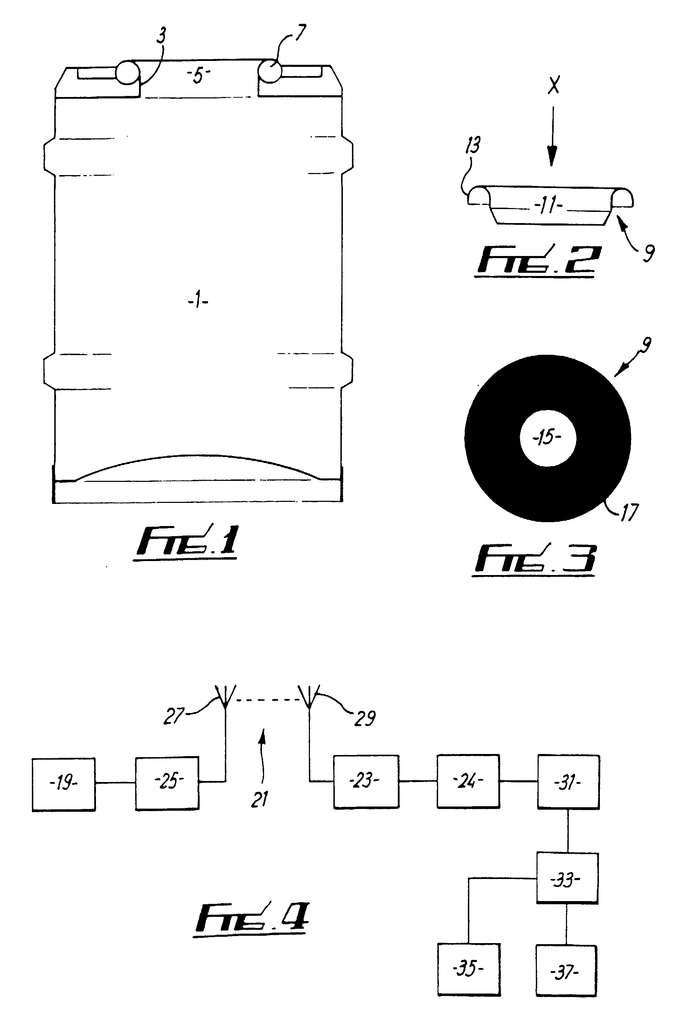

A drum 1 for use in the remotely handled storage of UO₃ powder is shown in Figure 1. The drum 1 has a generally right circular cylindrical body shape. The drum 1 has at its upper region a neck portion 3 providing a mouth 5 which permits addition to or extraction from the drum 1 of UO₃ powder. The mouth 5 has a lip 7.

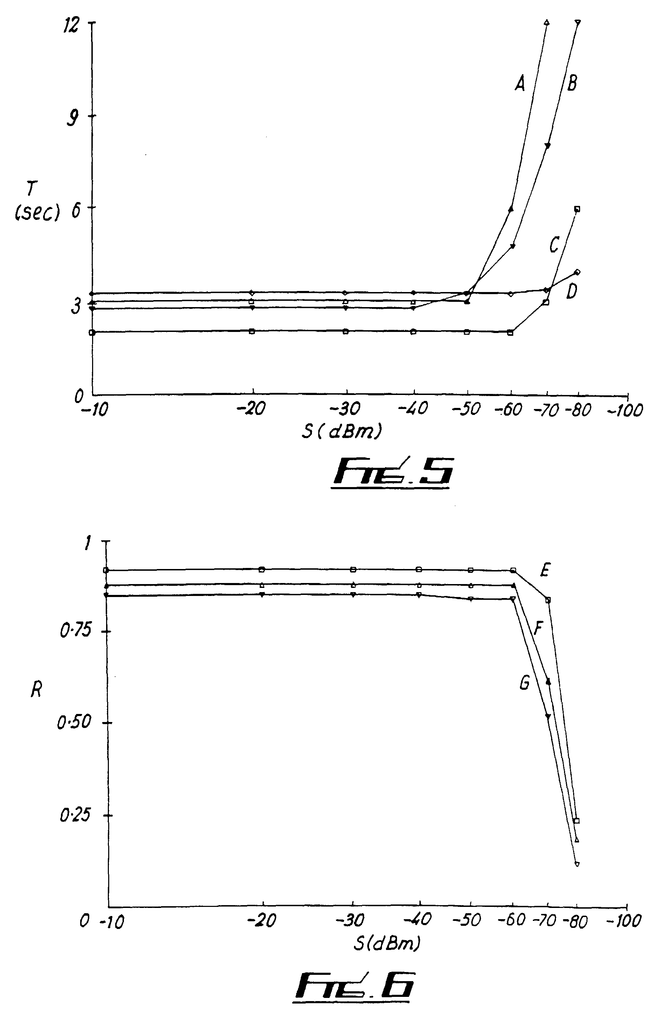

A lid 9 for the drum 1 is shown in Figures 2 and 3. The lid 9 comprises a circular basin 11 with an overhanging rim 13. The lid 9 is fitted onto the neck portion 3 of the drum 1 to close the opening provided by the mouth 5. This is carried out by crimping also a gasket (not shown) so that the space between the basin 11 and rim 13 is firmly engaged by the lip 7 to provide a tight seal to the drum 1.

As seen in Figure 3, the top surface of the lid 9 has a target which comprises a reflective , ie uncoated, circular region 15 at the centre of the lid 9 and an annular blackened region 17 formed by coating the remainder of the upper surface of the lid 9 with a suitable material.

Apparatus for detecting the centre of the lid 9 is shown in Figure 4. A video camera 19 mounted on a remotely controlled vehicle (not shown) close to the drum 1 (sealed by the lid 9) produces an electronic image of the top of the drum 1 including the lid 9. The video signal output from the camera 19 is transmitted by a transmitter 25, connected to the camera 19, via a communication link 21 to a remote receiver 23. The communication link 21 is shown conventionally as a transmit antenna 27 and a receive antenna 29. In practice, the transmit antenna may be mounted on the vehicle and the receive antenna 29 may comprise a leaky feeder cable located close to the transmit antenna 27 whatever the location of the vehicle carrying the transmit antenna 27. The received signal picked up by the receiver 23 is decoded by a decoder 24 and the output of the decoder 24 is applied to a frame grabber 31 which captures and digitises a picture frame which constitutes an image of the scene including the drum 1 and lid 9. The output of the frame grabber 31 is analysed on a pixel-by-pixel basis by a digital signal processor 33 which produces a histogram profile of the number of pixels in the detected image each having the various possible brightness or grey scale levels in a given brightness range. The histogram profile is then searched using an adaptive algorithm by the signal processor 33 for an intensity I as defined above, which when used in the connectivity algorithm gives a closed region of approximate shape and size corresponding to the circular region 15 (Figure 3) in the manner described above. When a suitable region is found the position of the centre of the region 15, ie the centre of the top of the lid 9, is calculated by the signal processor 33. Finally, a signal representative of the co-ordinates of the position of the drum is fed to a control computer 35 which is employed to adjust the position of a manipulator (not shown) on the vehicle carrying the camera 19. A visual image of the signals processed by the processor 33 may also be monitored on a display 37.

In a particular example of the system illustrated in Figures 1 to 3 image detection was carried out by a CCD camera system generating 625 line signals with 582 x 500 pixel resolution. The camera output was configured as a 1V peak to peak composite signal. The images were amplitude modulated onto a low power uhf carrier signal and transmitted to a remote base station where they were demodulated and captured using a Data Translation DT2255-50Hz frame grabber. This device has 762 by 512 pixels and 256 grey scale levels and can capture a video frame in 0.04 seconds. Processing of the image was performed using Image Analyst (Trade Mark) software which allows a choice of algorithm to calculate the correction data producing a measure of roundness of the drum lid target being inspected (the boundary between regions 15 and 17 in Figure 3), and generating a histogram of pixel data in an image, and allowing images to be stored for future reference.

Drum stores are not designed for remote operator access. Consequently, image processing employed in the processor 31 is desirably robust. A connectivity algorithm was employed in the signal processing. This draws a line connecting adjacent pixels of equal luminous intensity. The intensity I to be mapped was found from the histogram as that applying in the image at the boundary between regions 15 and 17. In this manner it was possible to identify the region of glare (ie high brightness or intensity) in the image corresponding to region 15. Other areas of similar intensity could be rejected as being too large or too small to fit the known dimensions of the boundary.

As noted above, a feature within the Image Processing software used allows the "roundness" of the target to be quantified. This is essentially a measure of the mean square error of the actual boundary of the image detected compared with a perfect circle. For a circular target a good correlation would be found and the roundness would be 1.0. As the signal to noise ratio falls the definition of the circle would be lost and the roundness would fall. Thus, any significant error in the measured mean square error could lead to an error in calculation the centre of the drum.

Figure 5 illustrates the effect of using a drum lid of the form shown in Figure 3 as compared with a conventional drum lid having no special target area (eg having a fully reflective upper surface). Curves A, B, and C in Figure 5 represent images taken by identical video cameras located on different vehicles all inspecting a conventional lid surface and Curve D represents an image taken by one of a number of identical video cameras located on different vehicles inspecting a lid surface as in Figure 3. Curve D represents the worst case of such images. As shown, the signal processing time T (seconds) for Curves A to C rapidly increases for signal to noise ratios between -60dBm and -80dBm whereas the signal processing time T for Curve D is still low for these signal to noise ratios.

Figure 6 illustrates the roundness of a target identified for different signal to noise ratios S for a drum lid as shown in Figure 3. Curves E, F, and G shown in Figure 3 are respectively plots of the best, typical and worst results obtained from a multiplicity of detections using identical video cameras on different vehicles.

The roundness is a measure of the success of identifying the target; even for the worst case, curve G, the target could still be identified at -80dBm. This was not possible for a conventional drum lid.

## Claims

1. A drum (1) for use in a remotely controlled environment, the drum having a closed top providing an outer surface adapted to be recognised by an optical detection system, said outer surface having a first region (15) and a second region (17) having a common boundary therebetween and having different optical reflectivities so that there is an optical contrast between them, wherein said first (15) region is or approximates to a flat reflecting circular area (15) having its centre substantially co-incident with the drum axis and wherein said second region (17) is absorbing and encloses said first region, the optical contrast facilitating detection of the centre of the outer surface by an optical detection system.

2. A drum (1) as in claim 1 wherein the drum is cylindrical and has a shape which is or approximates to a right circular cylinder.

3. A drum (1) as in claim 1 or claim 2 wherein a substantial part of the said outer surface comprises a flat surface.

4. A drum (1) as in any one of the preceding claims and wherein the said top of the drum comprises a neck portion (3) on which is fitted a lid or closure (9) which provides the said outer surface.

5. A drum (1) as in claim 4 and wherein the said lid or closure (9) has a rim formation (13) which fits on a lip (7) on the said neck (3).

6. A drum (1) as in any one of the preceding claims wherein the second region comprises an absorbing ring formed around the said circular area (15), the absorbing ring (17) occupying substantially the remainder of the outer surface.

7. A method of detecting the centre of the said outer surface of the top of the drum as claimed in any one of the preceding claims, the method comprising detecting by a photodetector (19) optical radiation reflected from the top of the drum, analysing (24, 31, 33) an output signal provided by the photodetector to detect features in the signal corresponding to the boundary between the said first (15) and second (17) regions on the drum top outer surface, and calculating from the position of the said features in the analysed signal the position of the centre of the drum.

8. A method as in claim 7 and wherein the said photodetector comprises a video camera (19), the output signal comprising a series of pixels in a picture frame detected by the camera.

9. A method as in claim 8 and wherein the said image analysis and centre calculation is carried out by a digital computer (33).

10. A method as in claim 9 and wherein the digital computer (33) carries out the image analysis by a connectivity signal processing algorithm which finds the boundary around bright pixels in the image corresponding to the first region (15) enclosed by the second region (17).

11. A method as in claim 10 and wherein the digital computer (33) also operates an algorithm by which permissible maximum and minimum limits are applied to the number of pixels in the region enclosed by the detected boundary and/or which calculates the shape of the region in the detected image and compares it with a perfect shape so that spurious images, other than of the first region (15), which may be present in the detected signal, may be rejected by the signal processing system.

12. A method as in claim 9, 10 or 11 wherein the digital computer (33) produces a histogram profile of the number of pixels in the detected image having each of the various possible brightness or grey scale levels in a given brightness range.

13. A method as in claim 12 and wherein the digital computer operates an algorithm which is adaptive to the histogram profile to find a transition in the profile corresponding to the brightness or reflectivity transition between the first (15) and second (17) regions.

14. A method as in claim 13 and wherein the digital computer employs an algorithm which operates by starting at the high brightness end of the histogram and then moving through the histogram in a direction of reducing pixel brightness until an intensity I is obtained, I being found when the total number of pixels of brightness equal to or greater than the value of I is equal to a minimum permissible area for the first region, the intensity I then being used within the connectivity algorithm to produce a contour of pixels of value I which form a closed area.

## Patentansprüche

1. Trommel bzw. trommelförmiger Behälter (1) zum Einsatz in einer ferngesteuerten Umgebung, die Trommel aufweisend: ein geschlossenes Oberteil, das eine Außenoberfläche bereitstellt, die ausgelegt ist, daß sie mit Hilfe eines optischen Detektionssystems erkannt werden kann, welche Außenoberfläche einen ersten Bereich (15) und einen zweiten Bereich (17) aufweist, die eine gemeinsame Grenze zwischen sich aufweisen und die verschiedene optische Reflektivitäten aufweisen, so daß zwischen diesen ein optischer Kontrast besteht, wobei der erste (15) Bereich eine flache reflektierende, kreisförmige Fläche (15) ist oder diese annähert, deren Mitte im wesentlichen mit der Trommelachse zusammenfällt, und wobei der zweite Bereich (17) absorbierend ist und den ersten Bereich umgibt, wobei der optische Kontrast die Detektion der Mitte der Außenoberfläche mit Hilfe eines optischen Detektionssystems erleichtert.

2. Trommel (1) nach Anspruch 1, wobei die Trommel zylinderförmig ist und eine Gestalt aufweist, die einen aufrechten kreisförmigen Zylinder darstellt oder diesen annähert.

3. Trommel (1) nach Anspruch 1 oder Anspruch 2, bei der der wesentliche Teil der Außenoberfläche eine ebene Oberfläche umfaßt.

4. Trommel (1) nach einem der vorhergehenden Ansprüche und bei der das Oberteil der Trommel einen Ansatzabschnitt (3) umfaßt, auf den ein Deckel oder ein Verschluß (9) aufgepaßt ist, der die Außenoberfläche bereitstellt.

5. Trommel (1) nach Anspruch 4 und bei der der Deckel oder Verschluß (9) ein Rand- bzw. Krempengebilde (13) aufweist, das auf eine Lippe (7) auf dem Ansatz (3) paßt.

6. Trommel (1) nach einem der vorhergehenden Ansprüche, wobei der zweite Bereich einen absorbierenden Ring umfaßt, der um die kreisförmige Fläche (15) herum ausgebildet ist, wobei der absorbierende Ring (17) den Rest der Außenoberfläche im wesentlichen ausfüllt.

7. Verfahren zum Detektieren der Mitte der Außenoberfläche des Oberteils der Trommel nach einem der vorhergehenden Ansprüche, das Verfahren umfassend: eine Detektion einer von dem Oberteil der Trommel reflektierten optischen Strahlung mit Hilfe eines Photodetektors (19), eine Analyse (24, 31, 33) eines von dem Photodetektor bereitgestellten Ausgangssignals, um Merkmale in dem Signal zu detektieren, die der Grenze zwischen dem ersten (15) und dem zweiten (17) Bereich auf der Außenoberfläche des Trommeloberteils entsprechen, und eine Berechnung der Position der Mitte der Trommel aus der Position der Merkmale in dem analysierten Signal.

8. Verfahren nach Anspruch 7 und bei dem der Photodetektor eine Videokamera (19) umfaßt, wobei das Ausgangssignal eine Serie von Bildpunkten in einem mit Hilfe der Kamera detektierten Bild umfaßt.

9. Verfahren nach Anspruch 8 und bei dem die Bildanalyse und die Mittenberechnung mit Hilfe eines Digitalcomputers (33) ausgeführt wird.

10. Verfahren nach Anspruch 9 und bei dem der Digitalcomputer (33) die Bildanalyse mit Hilfe eines Verknüpfungssignal-Verarbeitungsalgorithmusses ausführt, der die Grenze um helle Bildpunkte in dem Bild auffindet, die dem ersten Bereich (15) entsprechen, der von dem zweiten Bereich (17) umgeben ist.

11. Verfahren nach Anspriuch 10 und bei dem der Digitalcomputer (33) auch einen Algorithmus betreibt, bei dem zulässige maximale und minimale Grennwerte auf die Anzahl von Bildpunkten in dem von der detektierten Grenze umgebenen Bereich angelegt werden und/oder der die Form bzw. Kontur des Bereiches in dem detektierten Bild berechnet und diese mit einer perfekten Form vergleicht, so daß mangelbehaftete Bilder, und zwar andere Bilder als von dem ersten Bereich (15), die in dem detektierten Signal vorliegen können, von dem Signalverarbeitungssystem zurückgewiesen werden können.

12. Verfahren nach Anspruch 9, 10 oder 11, bei dem der Digitalcomputer (33) ein Histogrammprofil der Anzahl von Bildpunkten in dem detektieren Bild erzeugt, die jeweils von den zahlreichen möglichen Helligkeits- oder Graustufenwerten in einem gegebenen Helligkeitsbereich sind.

13. Verfahren nach Anspruch 12 und bei dem der Digitalcomputer einen Algorithmus betreibt, der an das Histogrammprofil angepaßt werden kann, um einen Übergang in dem Profil aufzufinden, der dem Helligkeits- oder Reflektivitätsübergang zwischen dem ersten (15) und dem zweiten (17) Bereich entspricht.

14. Verfahren nach Anspruch 13 und bei dem der Digitalcomputer einen Algorithmus einsetzt, der betrieben wird, indem man an dem Ende des Historgramms mit der hoben Helligkeit beginnt und indem man sich dann durch das Histogramm in einer Richtung abnehmender Bildpunkthelligkeit bewegt, solange, bis eine Intensität I erreicht wird, wobei I aufgefunden wird, wenn die Gesamtzahl von Bilpunkten von einer Helligkeit, die gleich oder größer dem Wert von I ist, gleich einer minimalen zulässigen Fläche für den ersten Bereich ist, wobei die Intensität I dann in dem Verknüpfungsalgorithmus verwendet wird, um eine Kontur von Bildpunkten mit einem Wert I zu erzeugen, die eine geschlossene Fläche ausbilden.

## Revendications

1. Fût (1) destiné à être utilisé dans des conditions de commande à distance, le fût ayant une partie supérieure fermée constituant une surface externe destinée à être reconnue par un système de détection optique, la surface externe ayant une première région (15) et une seconde région (17) ayant une limite commune et ayant des pouvoirs réflecteurs optiques différents si bien qu'il existe un contraste optique entre elles, dans lequel la première région (15) est une surface circulaire plate réfléchissante (15) ou correspond approximativement à une telle surface dont le centre coïncide pratiquement avec l'axe du fût, et la seconde région (17) est absorbante et entoure la première région, le contraste optique facilitant la détection du centre de la surface externe par un système de détection optique.

2. Fût (1) selon la revendication 1, dans lequel le fût est cylindrique et a une forme de cylindre à section droite circulaire ou est proche d'une telle forme.

3. Fût (1) selon la revendication 1 ou 2, dans lequel une partie importante de la surface externe est une surface plate.

4. Fût (1) selon l'une quelconque des revendications précédentes, dans lequel la partie supérieure du fût comprend une partie de col (3) sur laquelle est monté un couvercle ou organe (9) de fermeture qui forme ladite surface externe.

5. Fût (1) selon la revendication 4, dans lequel le couvercle ou organe de fermeture (9) a un organe conformé (13) de rebord qui s'ajuste sur une lèvre (7) formée sur le col (3).

6. Fût (1) selon l'une quelconque des revendications précédentes, dans lequel la seconde région comprend un anneau absorbant formé autour de la surface circulaire (15), l'anneau absorbant (17) occupant pratiquement le reste de la surface externe.

7. Procédé de détection du centre de la surface externe de la partie supérieure du fût selon l'une quelconque des revendications précédentes, le procédé comprenant la détection, à l'aide d'un photodétecteur (19), du rayonnement optique réfléchi par la partie supérieure du tambour, l'analyse (24, 31, 33) d'un signal de sortie donné par le photodétecteur pour la détection de caractéristiques du signal qui correspondent à la limite entre les première (15) et seconde (17) régions de la surface supérieure externe du fût, et le calcul, depuis la position de ces caractéristiques du signal analysé, de la position du centre du fût.

8. Procédé selon la revendication 7, dans lequel le photodétecteur comprend une caméra vidéo (19) dont le signal de sortie comprend une série d'éléments d'image d'une trame détectée par la caméra.

9. Procédé selon la revendication 8, dans lequel l'analyse de l'image et le calcul du centre sont réalisés par un calculateur numérique (33).

10. Procédé selon la revendication 9, dans lequel le calculateur numérique (33) effectue une analyse d'image par un algorithme de traitement de signaux de connectivité qui détermine la limite entre les éléments d'image clairs dans l'image correspondant à la première région (15) entourée par la seconde région (17).

11. Procédé selon la revendication 10, dans lequel le calculateur numérique (33) met aussi en oeuvre un algorithme grâce auquel des limites maximale et minimale permises sont appliquées au nombre d'éléments d'image compris dans la région entourée par la limite détectée et/ou qui calcule la forme de la région contenue dans l'image détectée et la compare à une forme parfaite afin que les images parasites, autres que la première région (15), qui peuvent être présentes dans le signal détecté, puissent être rejetées par le système de traitement de signaux.

12. Procédé selon la revendication 9, 10 ou 11, dans lequel le calculateur numérique (33) produit un profil d'histogramme du nombre d'éléments d'image de l'image détectée, ayant chacun des divers niveaux possibles de luminosité ou d'une échelle de gris dans une plage déterminée de luminosité.

13. Procédé selon la revendication 12, dans lequel le calculateur numérique agit sur un algorithme qui s'adapte au profil de l'histogramme pour la détermination d'une transition du profil qui correspond à la transition de luminosité ou de pouvoir réflecteur entre la première région (15) et la seconde (17).

14. Procédé selon la revendication 13, dans lequel le calculateur numérique utilise un algorithme qui agit au début sur l'extrémité de luminosité élevée de l'histogramme, puis se déplace dans l'histogramme dans le sens de la réduction de la luminosité des éléments d'image jusqu'à l'obtention d'une intensité I, I étant déterminée lorsque le nombre total d'éléments d'image de luminosité égale ou supérieure à la valeur I est égal à une surface minimale permise pour la première région, l'intensité I étant alors utilisée dans l'algorithme de connectivité pour la production d'un contour des éléments d'image de valeur I qui forme une surface fermée.
